# EUROPÄISCHE PATENTSCHRIFT

(11) **EP 0 933 563 B1**
(45) Veröffentlichungstag und Bekanntmachung des Hinweises auf die Patenterteilung: **25.08.1999**
(21) Anmeldenummer: 98102667.7
(22) Anmeldetag: 17.02.1998
(51) Int. Cl.: F16H 61/26

(54) **Schaltvorrichtung für Wechselgetriebe von Kraftfahrzeugen**
Shift device for gear transmission of motor vehicles
Dispositif de changement de vitesses pour transmission de vitesse de véhicule

(43) Veröffentlichungstag der Anmeldung: 04.08.1999
(73) Patentinhaber: Ford Global Technologies, Inc., A subsidiary of Ford Motor Company, Dearborn, Michigan 48126 (US)
(72) Erfinder: Deidewig, Hartmut, 51503 Roesrath (DE); Chazotte, Jean-Pierre, 50678 Koeln (DE); Doelling, Matthias, 51429 Bergisch Gladbach (DE)
(74) Vertreter: Drömer, Hans-Carsten, Dipl.-Ing.

(56) Entgegenhaltungen:
- EP-A- 0 072 464
- DE-A- 19 523 141
- NL-C- 1 001 793
- US-A- 4 631 975

## Beschreibung

Die Erfindung bezieht sich auf eine Schaltvorrichtung für Wechselgetriebe von Kraftfahrzeugen, mit einer im Getriebegehäuse axial bewegbaren und verdrehbaren Schaltwelle, an deren einem Ende eine Betätigungs-Hebelanordnung angreift, an der wieder entsprechende Enden eines Schaltgestänges oder von Bowdenzug-Schaltkabeln angreifen.

Aus der DE 195 23 141 C2 ist eine Schaltvorrichtung für ein Gangwechselgetriebe eines Kraftfahrzeuges bekannt, bei der die Betätigungs-Hebelanordnung für die axial bewegbare und verdrehbare Schaltwelle von zwei Hebelanordnungen gebildet werden, von denen die eine für die Verdreh-Bewegung unmittelbar an der Schaltwelle angreift und die zweite für die axiale Bewegung über einen, in einem Schwenkpunkt an einem Gehäuseteil gelagerten Winkelhebel nach Art einer Schaltgabel an der Schaltwelle angreift.

Die bekannte Betätigungs-Hebelanordnung weist den Nachteil auf, daß die Gelenkverbindung nach Art einer Schaltgabel mit Gleitbewegungen verbunden ist, wodurch die entsprechende Anordnung geschmiert und durch Schutzbälge vor dem Eintritt von Schmutz abgedeckt werden muß.

Die Aufgabe der Erfindung ist es, eine Schaltvorrichtung für Wechselgetriebe von Kraftfahrzeugen, der im Oberbegriff des Patentanspruches 1 erläuterten Art derart zu verbessern, daß die Betätigungs-Hebelanordnung wesentlich einfacher und kostengünstiger und mit geringerem Aufwand für erforderliche Abdeckungen gegen Schmutz hergestellt werden kann.

Gemäß der Erfindung wird diese Aufgabe gelöst, indem eine Schaltvorrichtung für Wechselgetriebe von Kraftfahrzeugen, der im Oberbegriff des Patentanspruches 1 erläuterten Art, die im Kennzeichenteil des Patentanspruches 1 aufgezeigten Merkmale aufweist.

Dadurch, daß etwa parallel zur Schaltwelle ein vom Getriebegehäuse aufragender Stützbolzen mit Kugelkopf vorgesehen ist, an dem sich ein dreiarmiger Betätigungshebel über eine Kugelpfanne mit nur zwei Verdrehungs-Freiheitsgraden gelenkig abstützt, wobei dessen drei Arme nach Art eines orthogonalen Achsenkreuzes senkrecht zueinander angeordnet sind und wobei ein Arm über eine Kugelgelenk-Verbindung mit einem von der Schaltwelle radial abragenden Bolzen und die beiden anderen Arme über Kugelgelenk-Verbindungen mit den Enden eines Schaltgestänges bzw. von Bowdenzug-Schaltkabeln verbunden sind, wird die gewünschte axiale und Verdreh-Bewegung der Schaltwelle nur über den einen Arm des dreiarmigen Betätigungshebels über die Kugelgelenk-Verbindung sowohl in axialer als auch in tangentieller Richtung übertragen und eine solche Kugelgelenk-Verbindung kann in bekannter Weise sehr kostengünstig und sehr einfach gegen den Eintritt von Schmutz gesichert hergestellt werden.

In den weiteren Patentansprüchen sind weitere zweckmäßige Ausgestaltungen der Erfindung näher erläutert.

Die Erfindung wird anhand eines in den beiliegenden Zeichnungen gezeigten Ausführungsbeispieles näher erläutert. Es zeigt:
- Fig. 1: eine Schrägrißdarstellung der erfindungsgemäßen Schaltvorrichtung für Wechselgetriebe von Kraftfahrzeugen mit dem dreiarmigen Betätigungshebel und
- Fig. 2: eine Explosionsdarstellung der Schaltvorrichtung nach Fig. 1, aus der die miteinander zusammenwirkenden Einzelbauteile zu ersehen sind.

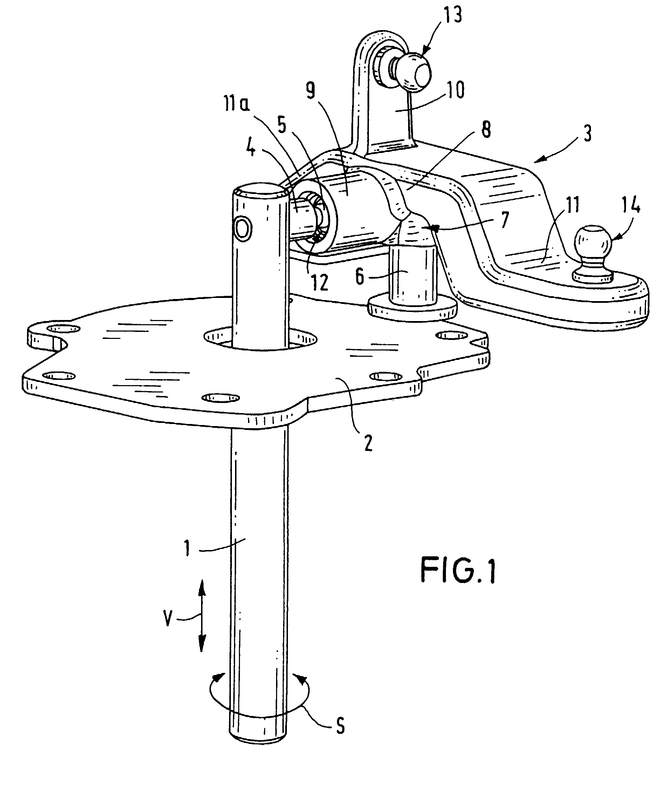

In Fig. 1 sind nur die zur Erläuterung der Erfindung erforderlichen Bauteile einer Schaltvorrichtung für Wechselgetriebe von Kraftfahrzeugen gezeigt und es sind dies die axial bewegbare und verdrehbare Schaltwelle 1 und eine an sich bekannte Abschlußplatte 2 einer Montageöffnung, an der die Teile der äußeren Betätigungs-Hebelanordnung 3 befestigt sind.

Gemäß der vorliegenden Erfindung ist die Schaltwelle 1 an ihrem einen Ende mit einem radial abragenden Bolzen 4 mit einem Kugelkopf 5 versehen. Im vorliegenden Fall ist die Schaltwelle 1 zur Ausführung von Vorwählbewegungen axial verschiebbar, siehe den Doppelpfeil V, während sie zum Einrücken von Gängen verdrehbar ist, siehe den Doppelpfeil S.

An der Abschlußplatte 2, die normalerweise eine Montageöffnung im Getriebegehäuse (nicht gezeigt) verschließt, ist ein etwa parallel zur Schaltwelle 1 aufragender Stützbolzen 6 angeordnet, der mit einer Kugelgelenk-Verbindung 7 mit nur zwei Verdrehungs-Freiheitsgraden versehen ist. Ein dreiarmiger Betätigungshebel 8 weist drei nach Art eines orthogonalen Achsenkreuzes senkrecht zueinander angeordnete Arme 9, 10 und 11 auf, die jeweils eine Kugelgelenk-Verbindung 12, 13 und 14 aufweisen.

Die Kugelgelenk-Verbindungen 12, 13 und 14 können hierbei in den verschiedensten, an sich bekannten Ausführungsformen ausgebildet werden.

Über die Kugelgelenk-Verbindung 7 mit nur zwei Verdrehungs-Freiheitsgraden ist der dreiarmige Betätigungshebel 8 auf dem Stützbolzen 6 eingeschränkt kugelgelenkig schwenkbar abgestützt. Der Arm 9 stellt über die Kugelgelenk-Verbindung 12 eine Antriebsverbindung zum Bolzen 4 an der Schaltwelle 1 her und über die Kugelgelenk-Verbindungen 13 und 14 an den beiden anderen Armen 10 und 11 des dreiarmigen Betätigungshebels 8 können übliche Schaltbetätigungsgestänge bzw. Bowdenzug-Schaltkabel (nicht gezeigt) angreifen.

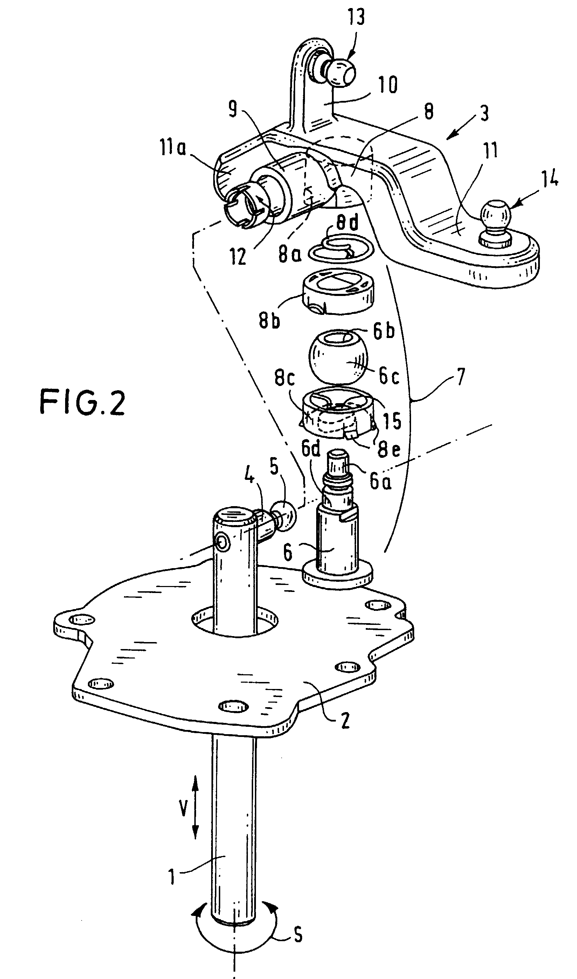

Im Zusammenhang mit der Fig. 2, die die Schaltvorrichtung gemäß der Erfindung in einer Explosionsdarstellung zeigt, wird auf wesentliche Merkmale der Erfindung im Detail hingewiesen.

So sind in dieser Ausführungsform die Teile der Kugelgelenk-Verbindungen 12, 13 und 14 am dreiarmigen Betätigungshebel 8 einmal bei 12 als eine Kugelpfanne und die beiden anderen Male bei 13 und 14 als ein Kugelkopf ausgebildet.

Die Kugelpfanne 12 wirkt mit dem Kugelkopf 5 am radialen Bolzen 4 an der Schaltwelle 1 gelenkig zusammen und an den entsprechenden Kugelköpfen 13 und 14 wirken mit entsprechenden als Kugelpfannen-Endanschlüssen ausgebildeten Enden von Bowdenzug-Schaltkabel (nicht gezeigt) zusammen.

Die Kugelgelenk-Verbindung 7 mit nur zwei Verdrehungs-Freiheitsgraden für den Stützbolzen 6 ist hierbei etwas aufwendiger gestaltet und besteht aus mehreren Einzelteilen, die nachfolgend erläutert werden.

Der Stützbolzen 6 weist einen abgesetzten Abschnitt 6 a auf, der zur Aufnahme einer mit einer Bohrung 6 b versehenen Kugel 6 c vorgesehen ist.

In einer in dem dreiarmigen Betätigungshebel 8 in gestrichelten Linien angedeuteten zylindrischen Aufnahmeöffnung 8a wird ein oberes und ein unteres Kugelpfannenteil 8b und 8c sowie eine Vorspannfeder 8d aufgenommen, wobei die untere Kugelpfanne 8c hierbei in der Aufnahmeöffnung 8a über entsprechende Rastvorsprünge 8e in ihrer die Lage eines Langloches 9 bestimmenden Einbaulage gehalten wird. Das Langloch 9 bewirkt die erfindungsgemäße Einschränkung der Bewegungsgrade der Kugelgelenk-Verbindung 7 in Verbindung mit dem Absatz 6d am Bolzen 6.

Der dreiarmige Betätigungshebel 8 kann hierbei in zweckmäßiger Weise mit einem den Arm 11 in entgegengesetzter Richtung verlängernden vierten Arm 11a versehen sein, wobei die Arme 11 und 11a mit zusätzlichen Gewichten (nicht gezeigt) versehen sind, die eine die Schaltbewegung unterstützende Schwungmasse bilden.

Es wird darauf hingewiesen, daß die Ausbildung der Kugelgelenk-Verbindungen in den verschiedensten, dem Fachmann bekannten Bauformen erfolgen kann und dementsprechend keine Einschränkung der im Hauptanspruch aufgezeigten erfindungsgemäßen Lösung bewirken können.

## Patentansprüche

1. Schaltvorrichtung für Wechselgetriebe von Kraftfahrzeugen, mit einer im Getriebegehäuse axial bewegbaren und verdrehbaren Schaltwelle (1), an deren einem Ende eine Betätigungs-Hebelanordnung (3) angreift, an der wieder entsprechende Enden eines Schaltgestänges oder von Bowdenzug-Schaltkabeln angreifen
**dadurch gekennzeichnet**, daß
- etwa parallel zur Schaltwelle (1) ein vom Getriebegehäuse oder von einer Abschlußplatte (2) aufragender Stützbolzen (6) mit einer Kugelgelenk-Verbindung (7) mit nur zwei Verdrehungs-Freiheitsgraden versehen ist,
- ein dreiarmiger Betätigungshebel (8) sich über die eingeschränkte Kugelgelenk-Verbindung (7) an dem Stützbolzen (6) abstützt und die drei Arme (9, 10 und 11) des dreiarmigen Betätigungshebels (8) nach Art eines orthogonalen Achsenkreuzes senkrecht zueinander angeordnet sind, wobei
- ein Arm (9) über eine Kugelgelenk-Verbindung (12) mit einem von der Schaltwelle (1) radial abragenden Bolzen (4) verbunden ist und die beiden anderen Arme (10 und 11) über Kugelgelenk-Verbindungen (13 und 14) mit den entsprechend ausgebildeten Enden eines Schaltgestänges bzw. von Bowdenzug-Schaltkabeln verbunden sind.

2. Schaltvorrichtung für Wechselgetriebe von Kraftfahrzeugen nach Anspruch 1,
**dadurch gekennzeichnet,** daß
- der von der Schaltwelle (1) radial abragende Bolzen (4) unmittelbar mit einem Kugelkopf (5) versehen ist und der Arm (9) des dreiarmigen Betätigungshebels (8) unmittelbar mit einer Kugelpfanne (12) versehen ist.

3. Schaltvorrichtung für Wechselgetriebe nach den Ansprüchen 1 und 2,
**dadurch gekennzeichnet**, daß
- der dreiarmige Betätigungshebel (8) eine Aufnahmeöffnung (8a) aufweist, in der eine Vorspannfeder (8 d) und obere und untere Kugelpfannenteile (8 b und 8 c) über Rastzungen (8 e) fixiert aufgenommen werden und
- der Stützbolzen (6) einen Absatz (6 a) aufweist, auf dem über eine Bohrung (6b) eine Kugel (6 c) verrastet aufgenommen wird,
- wobei durch ein mit einem Absatz (6 d) zusammenwirkendes Langloch (9) im unteren Kugelpfannenteil (8 c) und dessen Ausrichtung in der Ebene der Schaltwelle (1) über die Rastzungen (8 e) die nur zwei Verdrehungs-Freiheitsgrade festgelegt sind.

4. Schaltvorrichtung für Wechselgetriebe nach den Ansprüchen 1 bis 3,
**dadurch gekennzeichnet**, daß
- der dreiarmige Betätigungshebel (8) mit den Teilen seiner Kugelgelenk-Verbindungen (12, 13 und 14) unmittelbar aus einem technischen Kunststoff mit den entsprechenden Festigkeitseigenschaften im Spritzgußverfahren hergestellt ist.

5. Schaltvorrichtung für Wechselgetriebe nach einem der Ansprüche 1 bis 4,
**dadurch gekennzeichnet**, daß
- der dreiarmige Betätigungshebel (8) in entgegengesetzter Richtung zum Hebelarm (11) mit einem zusätzlichen Hebelarm (11 a) versehen ist und beide Hebelarme (11 und 11 a) mit zusätzlichen Gewichten versehen sind, die eine die Schaltbewegung unterstützende Schwungmasse bilden.

## Revendications

1. Dispositif de changement de vitesses pour boîte de vitesses de véhicules automobiles, avec un arbre (1) de changement de vitesses, axialement mobile et rotatif dans le carter de boîte et à une extrémité duquel agit une tringlerie de commande (3) à leviers, sur laquelle agissent à nouveau des extrémités correspondantes d'une tringlerie de changement de vitesses ou de câbles Bowden de changement de vitesses,
**caractérisé** en ce que
- un boulon de soutien (6), se dressant à partir du carter de boîte ou d'une plaque d'obturation (2) environ parallèlement à l'arbre (1) de changement de vitesses, est doté d'une articulation sphérique (7) ne possédant que deux degrés de liberté de rotation,
- un levier de commande (8) à trois bras s'appuie sur le boulon de soutien (6) par l'intermédiaire de l'articulation sphérique limitée (7), et les trois bras (9, 10 et 11) du levier de commande (8) à trois bras sont disposés perpendiculairement entre eux, à la manière d'un système d'axes orthogonaux,
- un premier bras (9) étant relié par l'intermédiaire d'une articulation sphérique (12) à un boulon (4) faisant radialement saillie de l'arbre (1) de changement de vitesses, et les deux autres bras (10 et 11) étant reliés par l'intermédiaire d'articulations sphériques (13 et 14) aux extrémités, configurées en conséquence, d'une tringlerie de changement de vitesses ou de câbles Bowden de changement de vitesses.

2. Dispositif de changement de vitesses pour boîte de vitesses de véhicules automobiles selon la revendication 1, **caractérisé** en ce que le boulon (4) faisant radialement saillie de l'arbre (1) de changement de vitesses est directement pourvu d'une tête sphérique (5), et le bras (9) du levier de commande (8) à trois bras est pourvu d'un coussinet sphérique (12).

3. Dispositif de changement de vitesses pour boîte de vitesses selon les revendications 1 et 2, **caractérisé** en ce que
- le levier de commande (8) à trois bras présente une ouverture réceptrice (8a), dans laquelle un ressort de précontrainte (8d) et des coussinets sphériques supérieur et inférieur (8b et 8c) sont reçus en étant fixés en position au moyen de languettes d'enclenchement (8e), et
- le boulon de soutien (6) présente un gradin (6a), sur lequel une rotule (6c) est reçue en enclenchement au moyen d'un perçage (6b),
- les deux seuls degrés de liberté de rotation étant définis par un trou oblong (15) pratiqué dans le coussinet sphérique inférieur (8c) et coopérant avec un gradin (6d), et son alignement dans le plan de l'arbre (1) de changement de vitesses au moyen des languettes d'enclenchement (8e).

4. Dispositif de changement de vitesses pour boîte de vitesses selon les revendications 1 à 3, **caractérisé** en ce que le levier de commande (8) à trois bras et les éléments de ses articulations sphériques (12, 13 et 14) sont directement fabriqués par moulage par injection d'une matière plastique industrielle présentant des propriétés appropriées de résistance.

5. Dispositif de changement de vitesses pour boîte de vitesses selon une des revendications 1 à 3, **caractérisé** en ce que le levier de commande (8) à trois bras est pourvu d'un bras de levier supplémentaire (11a) en direction opposée au bras de levier (11), et les deux bras de levier (11 et 11a) sont pourvus de poids supplémentaires qui constituent une masse d'inertie favorisant le mouvement de changement de vitesses.

## Claims

1. Shifting device for speed-change gear units of motor vehicles, with an actuating shaft (1), which is axially displaceable and rotatable within a gearbox and with one end of which an actuating lever arrangement (3) engages, with which, in turn, corresponding ends of shift linkage or Bowden control shift cables engage, characterised in that
- approximately parallel to the actuating shaft (1), a supporting pin (6) with a ball-and-socket connection (7) with only two degrees of freedom of rotation is provided, rising up from the gearbox or from a cover plate (2),
- a three-armed actuating lever (8) is supported on the supporting pin (6) above the restricted ball-and-socket connection (7) and the three arms (9, 10, 11) of the three-armed actuating lever (8) are positioned perpendicular to one another in the form of an orthoganal axis intersection, whereby
- one arm (9) is connected via a ball-and-socket connection (12) to a pin (4) which projects radially from the actuating shaft (1) and the two other arms (10 and 11) are connected via ball-and-socket connections (13 and 14) with the correspondingly formed ends of shift linkage or Bowden control shift cables.

2. Shifting device for speed-change gear units of motor vehicles according to Claim 1, characterised in that
- the pin (4) which projects radially from the actuating shaft (1) is directly provided with a ball head (5) and the arm (9) of the three-armed actuating lever (8) is directly provided with a ball socket (12).

3. Shifting device for speed-change gear units of motor vehicles according to Claims 1 and 2, characterised in that
- the three-armed actuating lever (8) has a location hole (8 a) which holds a prestressed spring (8 d) and upper and lower ball socket parts (8 b and 8 c) in position by means of latched tongues (8 e) and
- the supporting pin (6) has a shoulder (6 a) on which a ball (6 c) is latched into place via a bore hole (6 c),
- whereby, by means of a slot (9) in the lower ball socket part (8 c) which cooperates with a shoulder (6 d) and its alignment in the plane of the actuating shaft (1) via the latched tongues (8 e), the two degrees of freedom of rotation are set.

4. Shifting device for speed-change gear units according to Claims 1 to 3, characterised in that
- the three-armed actuating lever (8) and the parts of its ball-and-socket connections (12, 13 and 14) are directly manufactured from a commercial plastic with the corresponding strength properties using injection moulding.

5. Shifting device for speed-change gear units according to one of Claims 1 to 4, characterised in that
- the three-armed actuating lever (8) is provided, in the opposite direction to the lever arm (11), with an additional lever arm (11 a) and both lever arms (11 and 11 a) are provided with additional weights which form a centrifugal mass which supports the shifting movement.
